# FASCICULE DE BREVET EUROPEEN

(11) **EP 2 932 354 B1**
(45) Date de publication et mention de la délivrance du brevet: **04.12.2019**
(21) Numéro de dépôt: 13811585.2
(22) Date de dépôt: 19.11.2013
(51) Int. Cl.: G06F 3/01, G06F 3/041

(54) **INTERFACE DE COMMANDE TACTILE**
BERÜHRUNGSSTEUERUNGSSCHNITTSTELLE
TACTILE CONTROL INTERFACE

(30) Priorité: 13.12.2012 FR 1203410
(43) Date de publication de la demande: 21.10.2015
(73) Titulaire: DAV, 94046 Créteil Cedex (FR)
(72) Inventeur: TISSOT, Jean-Marc, F-94046 Créteil Cedex (FR)
(74) Mandataire: Pothmann, Karsten
(86) Numéro de dépôt international: PCT/FR2013/000300
(87) Numéro de publication internationale: WO 2014/091089

(56) Documents cités:
- EP-A1- 2 202 619
- US-A1- 2003 214 485
- US-A1- 2010 045 624
- US-A1- 2010 103 640

## Description

La présente invention concerne une interface de commande tactile destinée notamment à être installée dans un véhicule automobile.

Afin d'améliorer l'ergonomie des véhicules automobiles et permettre l'accès à une multitude de fonctions sans surcharger les différents postes de commande (planche de bord, commande au volant, console centrale...), les constructeurs utilisent de plus en plus une interface tactile couplée à un écran d'affichage et permettant à l'utilisateur d'accéder à une pluralité de fonctions ou commandes à partir d'une simple interface uniforme qui permet d'obtenir des postes de commande épurés. De plus, afin d'être compatible avec le domaine automobile, une telle interface doit être fiable et avoir un coût limité.

Les documents US2010045624 A1 et US2003214485 A1 divulguent des interfaces de commande tactile comprenant une surface extérieure et des moyens de localisation d'un appui par un doigt d'un utilisateur.

Afin d'obtenir une telle interface, la présente invention concerne une interface de commande tactile comprenant une surface extérieure et des moyens de localisation d'un appui par un doigt d'un utilisateur sur la surface extérieure dans laquelle la surface extérieure est réalisée par une plaque rigide et en ce que lesdits moyens de localisation comprennent :
- au moins trois capteurs de force sur lesquels la plaque est fixée et configurés pour mesurer une force dans une direction sensiblement normale au plan de la plaque,
- des moyens de calcul de la position de l'appui d'un doigt sur la plaqueà partir des mesures fournies par lesdits au moins trois capteurs de force.

Selon un autre aspect de la présente invention, les moyens de calcul sont configurés déterminer la position de l'appui du doigt sur la plaque par triangulation à partir des mesures fournies par lesdits au moins trois capteurs de force.

Selon un aspect additionnel de la présente invention, l'interface de commande tactile comprend au moins quatre capteurs de force et dans laquelle les moyens de calcul sont configurés pour effectuer une pluralité de localisations par triangulation à partir de trois capteurs de force en utilisant alternativement les différentes combinaisons de trois capteurs parmi les au moins quatre capteurs de force.

Selon un autre aspect de la présente invention, les moyens de calcul sont configurés pour estimer des paramètres environnementaux en utilisant les mesures fournies par un capteur de force non utilisé pour la triangulation.

Selon un aspect supplémentaire de la présente invention, les moyens de calcul sont configurés pour localiser un point d'appui en déterminant un barycentre des mesures fournies par deux capteurs de force successivement pour différentes paires de capteurs de force.

Selon un autre aspect de la présente invention, les capteurs de force sont des capteurs piézoélectriques.

Selon un aspect supplémentaire de la présente invention, les capteurs piézoélectriques sont des capteurs amplifiés mécaniquement par une structure de forme sensiblement elliptique, l'élément piézoélectrique se trouvant selon le grand axe de l'ellipse et la force mesurée étant appliquée selon le petit axe de l'ellipse.

Selon un aspect additionnel de la présente invention, au moins un des capteurs de force est configuré pour transmettre un retour haptique à l'utilisateur.

Selon un autre aspect de la présente invention, les moyens de localisation sont configurés pour déterminer la force d'un appui d'un utilisateur.

Selon un aspect supplémentaire de la présente invention, l'interface tactile comprend également un écran d'affichage disposé en regard de la plaque, ladite plaque étant transparente.

Selon un aspect additionnel de la présente invention, les moyens de calcul comprennent un microcontrôleur.

Selon un autre aspect de la présente invention, les capteurs de force sont répartis de sorte qu'au niveau de la surface extérieure, le barycentre des points situés en regard des capteurs de force diffère du centre géométrique de ladite surface extérieure et en ce que les moyens de localisation sont configurés pour prendre en compte la position des capteurs de force pour déterminer la position d'un appui d'un utilisateur.

D'autres caractéristiques et avantages de l'invention apparaîtront dans la description qui va maintenant en être faite, en référence aux dessins annexés qui en représentent à titre indicatif mais non limitatif, un mode de réalisation possible. Seuls les aspects revendiqués dans les revendications font partie de l'invention. Les aspects non revendiqués ne sont que des exemples ne faisant pas partie de l'invention.

Sur ces dessins :
- La figure 1 représente un schéma d'une interface tactile comprenant trois capteurs de force ;
- La figure 2 représente un schéma d'interface tactile comprenant quatre capteurs de force ;
- La figure 3 représente un schéma d'un capteur de force piézoélectrique amplifié ;
- La figure 4 représente une vue de dessus d'une interface tactile selon un mode de réalisation de la présente invention ;
- La figure 5 représente une vue de face de l'interface tactile avec l'affichage du menu principal ;

Sur ces figures les mêmes numéros de référence correspondent à des éléments ayant la même fonction. De plus, pour les références comprenant un numéro et une lettre, le numéro désigne une classe d'éléments ayant la même fonction tandis que la lettre désigne un élément particulier de la classe, par exemple l'élément 5a est un élément particulier de la classe des capteurs de force désigné par la référence 5.

Les modes de réalisation de la présente invention concernent une interface de commande tactile 1 comprenant une surface extérieure ou surface tactile 2 sur laquelle le doigt de l'utilisateur vient appuyer pour engendrer une commande et des moyens de localisation de l'appui. La surface extérieure 2 est réalisée par une plaque rigide 3. Les moyens de localisation comprennent des capteurs de force 5 sur lesquels est fixée la plaque rigide 3. Par plaque rigide, on entend une plaque dont la déformation est négligeable par rapport à la déformation des capteurs de force 5 sous l'effet d'un appui sur ladite plaque, la force d'appui du doigt de l'utilisateur est donc entièrement transmise aux capteurs de force 5. La plaque rigide 3 est par exemple réalisée en polycarbonate ou en verre. Ainsi, en utilisant au moins trois capteurs de force 5 dont on connaît la position par rapport à la surface de la plaque rigide 3, on peut déduire la position du point d'appui sur la plaque 3 à partir des mesures de force fournies par les capteurs de force 5. Cette déduction pour passer des mesures fournies par les capteurs à la position de l'appui est réalisée par exemple par triangulation. La localisation du point d'appui peut être statique ou dynamique, c'est à dire qu'on détermine également un déplacement ou glissement du doigt sur la plaque 3.

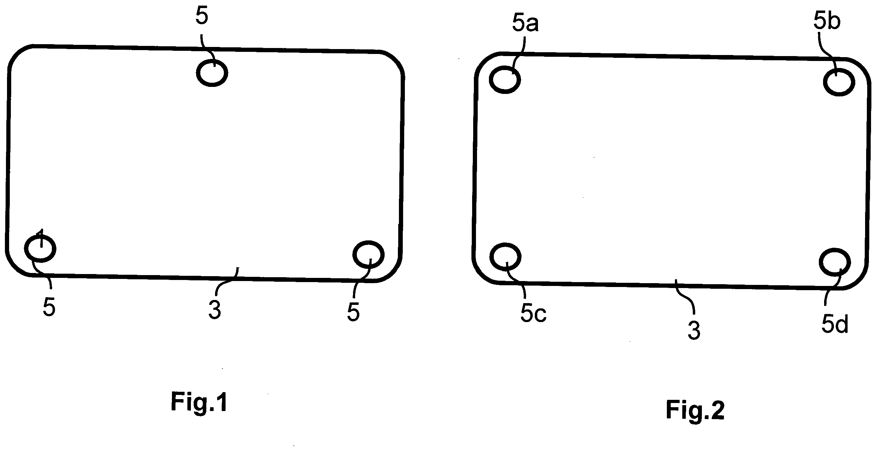

La figure 1 représente un mode de réalisation dans lequel on utilise trois capteurs de force 5 disposés de manière non alignée sur le pourtour de la plaque 3. Le positionnement de ces capteurs sur le pourtour permet d'associer un écran d'affichage à l'interface de commande tactile, cependant si la commande tactile ne comprend pas d'écran d'affichage, les capteurs de force 5 peuvent également être positionnés plus au centre de la plaque rigide 3. Les moyens de localisation 5 comprennent également des moyens de calcul, comme par exemple un microcontrôleur, qui permettent de réaliser les calculs nécessaires aux traitement des mesures fournies par les capteurs de force comme par exemple les calcules liés à la triangulation. L'interface de commande tactile 1 est généralement de forme rectangulaire comme représentée sur la figure 1 mais d'autres formes peuvent également être utilisées.

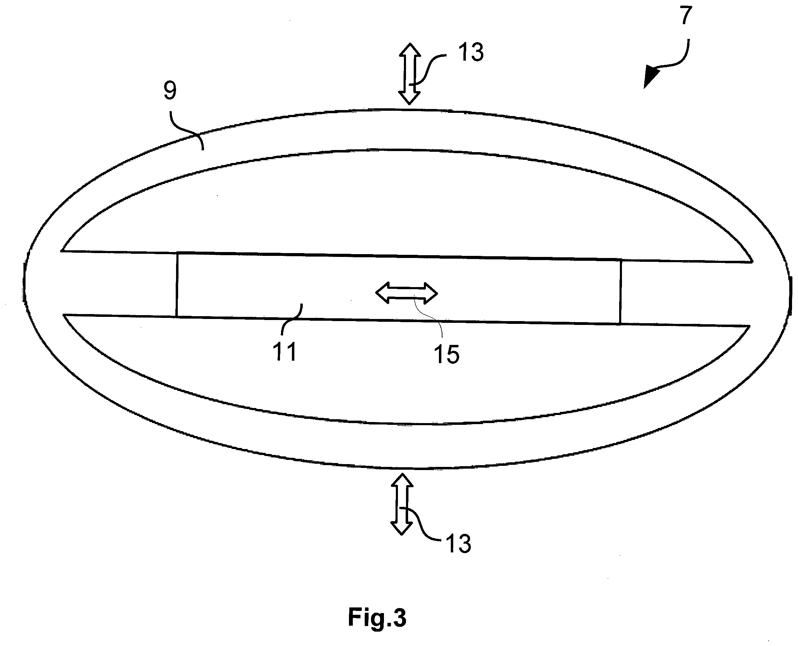

Les capteurs de force 5 sont configurés pour mesurer une force dans une direction sensiblement normale au plan de la plaque 3 et sont, par exemple, des capteurs piézoélectriques. Afin d'améliorer la sensibilité de l'interface de commande tactile 1, des capteurs piézoélectriques amplifiés peuvent être utilisés. La figure 3 représente un schéma d'un capteur piézoélectrique amplifié 7 comprenant une structure métallique 9 de forme sensiblement elliptique comprenant un grand axe et un petit axe qui sont perpendiculaires l'un par rapport à l'autre. L'élément piézoélectrique 11 étant disposé selon le grand axe de l'ellipse. L'axe sensible du capteur 7, c'est à dire l'axe selon lequel la force est mesurée correspond au petit axe de l'ellipse. Ainsi, une faible force appliquée selon le petit axe représenté par les flèches 13 engendre une déformation au niveau du grand axe représenté par la flèche 15 ce qui permet d'améliorer la sensibilité du capteur par rapport à un capteur piézoélectrique simple.

Selon un deuxième mode de réalisation, l'interface tactile 1 comprend quatre capteurs de force 5 disposés, par exemple, aux quatre coins de la plaque 3 comme représenté sur la figure 2. Les capteurs de force sont notés 5a, 5b, 5c et 5d. Trois capteurs suffisent à réaliser une détermination du point d'appui par triangulation, cependant l'utilisation de quatre capteurs permet d'améliorer la localisation statique mais également la localisation dynamique. Pour cela, on effectue une localisation, à un instant donné, par triangulation à partir des mesures fournies par trois capteurs de force 5, par exemple les capteurs 5a, 5b et 5c puis pour la localisation à l'instant suivant, on utilise les mesures fournies par les capteurs 5b, 5c et 5d. Ainsi, on utilise alternativement les quatre combinaisons de trois capteurs possibles ce qui permet d'améliorer la qualité de la localisation et de compenser une éventuelle dérive d'un capteur de force 5. Par ailleurs, le capteur non utilisé pour la triangulation peut être utilisé pour effectuer des mesures des paramètres environnementaux pouvant affecter la localisation par triangulation comme par exemple la présence de vibrations. Il est à noter qu'un nombre supérieur de capteurs de force 5 peut être utilisé ce qui permet d'améliorer encore la qualité de la localisation de l'appui.

De manière alternative, la localisation de la zone d'appui peut être déterminée en calculant le barycentre des mesures fournies par deux capteurs de force 5 en utilisant au moins deux paires de capteurs disposées de manière non parallèle. Par exemple, on détermine un barycentre entre les capteurs 5a et 5b ce qui donne un premier axe sur lequel se trouve la zone d'appui, cet axe est perpendiculaire à la droite passant par les capteurs 5a et 5b, puis, ou de façon simultanée, entre les capteurs 5b et 5c ce qui donne un deuxième axe sur lequel se trouve la zone d'appui, l'intersection entre ces deux axes correspondant à la situation géographique de l'appui sur la surface tactile 2. Le calcul du barycentre d'autres paires de capteurs permet d'améliorer la qualité et la fiabilité de la localisation de la zone d'appui en intégrant également les défauts d'inhomogénéité que peut présenter la plaque 3.

De plus, il est à noter que le positionnement des capteurs de force 5, pour les différents modes de réalisation, peut correspondre à une répartition « homogène » dans laquelle le barycentre des points de la surface tactile 2 en regard des capteurs de force 5 correspond au centre géométrique de la surface tactile 2, c'est-à-dire le barycentre de l'ensemble des points de la surface. Par exemple, dans le cas d'une surface rectangulaire avec quatre capteurs, les capteurs seront placés au centre des quatre côtés ou au niveau des quatre coins et le centre géométrique correspondra à l'intersection des diagonales du rectangle. La répartition peut également être « non homogène ou inhomogène » dans le cas où le barycentre des points de la surface tactile 2 en regard des capteurs de force 5 sera différent du centre géométrique de la plaque 3 par exemple pour tenir compte de la non homogénéité de la structure de la plaque 3 (différentes épaisseurs ou différents matériaux de la plaque 3), la présence de contraintes dans certaines zones de la plaque (dues par exemple à une fixation de la plaque sur une structure de l'interface de commande) ou pour améliorer la sensibilité dans certaines zones de la surface tactile 2. En effet, dans certains modes de réalisation seule une partie de la plaque 3 peut être utilisée comme commande tactile de sorte que les capteurs de force 5 sont positionnés de manière obtenir une sensibilité accrue dans cette zone.

Par ailleurs, les capteurs de force 5, notamment dans le cas de capteurs piézoélectriques, peuvent être utilisés pour fournir un retour haptique à l'utilisateur pour lui indiquer que la commande a bien été sélectionnée ou validée. Le retour haptique consiste à faire vibrer la plaque rigide 3. Pour cela, on utilise un ou plusieurs des capteurs de force 5 pour transmettre une onde vibratoire à la plaque rigide 3. En effet, dans le cas de capteurs piézoélectriques, la déformation du capteur sous l'effet d'une force créée une tension, proportionnelle à la déformation appliquée, en sortie du capteur. Cependant, cet effet piézoélectrique peut être inversé de sorte que l'application d'une tension sur la sortie du capteur piézoélectrique permet une déformation du capteur qui peut créer une onde vibratoire. Ainsi, les capteurs piézoélectriques servent non seulement à la localisation de la zone d'appui mais aussi au retour haptique ce qui permet de réduire le nombre d'équipements nécessaires à l'interface tactile 1. De même que précédemment, la position du ou des capteurs fournissant un retour haptique peut être « non homogène » de manière à accroitre la sensibilité du retour haptique dans certaines zones de la plaque ou pour prendre en compte la géométrie ou la structure de la plaque.

D'autre part, comme décrit précédemment, la mesure des capteurs piézoélectriques est sensible à la force générée par l'appui du doigt de l'utilisateur sur la plaque rigide 3. Ainsi, en plus de la position de l'appui, la force de l'appui peut aussi être déterminée, par exemple en faisant la somme des forces mesurées par les différents capteurs de force de sorte que différentes commandes peuvent être envisagées en fonction de la force de l'appui. Ainsi, le seul fait de toucher une zone de la plaque extérieure pourra sélectionner une fonction et une force d'appui plus importante de l'utilisateur dans cette zone validera le choix de la fonction sélectionnée. Un effet potentiomètre peut également être introduit, par exemple si la zone correspond au réglage du volume sonore, une force d'appui plus importante entrainera une augmentation du volume correspondant à un premier effet dynamique.

Un deuxième effet dynamique correspond à la détermination du déplacement ou glissement du point d'appui sur la surface tactile, ce glissement pouvant correspondre à une commande particulière. Les deux effets dynamiques (spatial avec le glissement et temporel avec la fonction potentiomètre) pouvant être couplés pour obtenir une commande supplémentaire ou une double commande.

L'interface tactile 1 peut aussi comprendre un écran d'affichage 17 situé derrière et en regard de la plaque rigide 3 de manière à afficher les différentes fonctions de l'interface tactile. Dans ce cas, la plaque rigide 3 sera transparente et les capteurs de force 5 seront placés sur le pourtour de la plaque extérieure rigide 3 ou le pourtour de l'écran 17 si la plaque 3 est plus grande que l'écran 17 de manière à permettre à l'utilisateur de voir l'écran d'affichage. L'écran d'affichage 17 est alors placé le plus près possible de la plaque rigide 3 tout en évitant la propagation des ondes vibratoires entre la plaque rigide 3 et l'écran d'affichage.

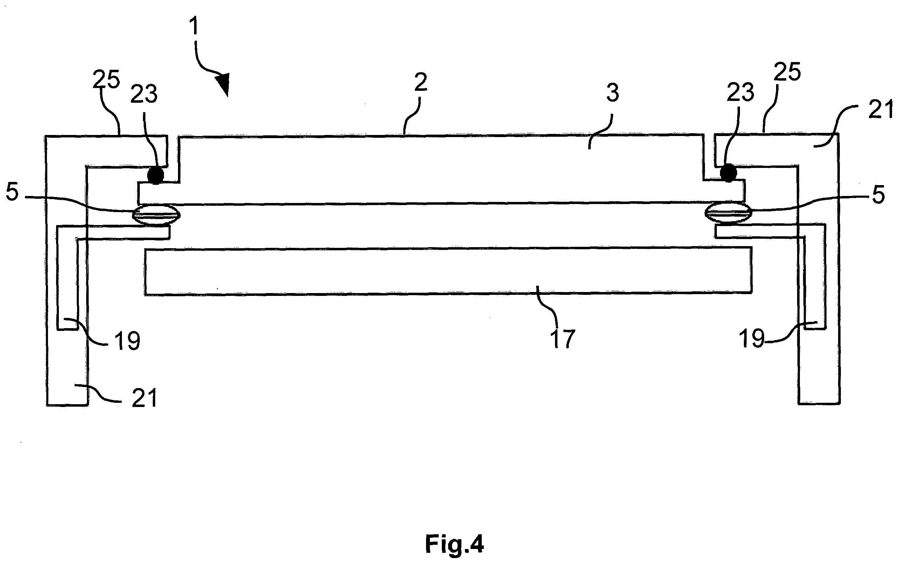

La figure 4 représente un exemple de réalisation d'une interface tactile 1 comprenant un écran d'affichage 17, par exemple un écran de type TFT (Thin Film Transistor en anglais, c'est-à-dire un écran comprenant des transistors à couche mince) placé derrière et en regard de la plaque rigide 3. La plaque rigide 3 est fixée sur les capteurs de force 5 qui sont eux mêmes fixés sur des supports 19, par exemple des supports métalliques qui peuvent être latéraux, verticaux ou diagonaux au niveau des angles où sont situés les capteurs de force 5. Les supports 19 sont fixés à la structure 21 de l'interface tactile 1 par exemple par moulage. La structure 21 est réalisée par exemple en Zamak® moulé de sorte que la structure 21 peut être moulée directement autour des supports 19. L'interface tactile 1 comprend également un joint périphérique 23 situé entre la plaque extérieure rigide 3 et les bords extérieurs 25 de la structure 21 de manière à éviter l'infiltration de poussières entre la plaque rigide 3 transparente et l'écran d'affichage 17.

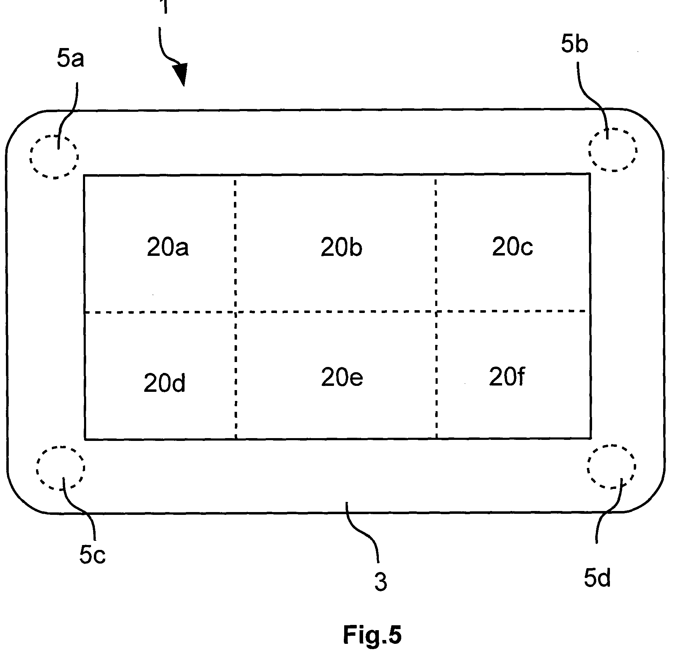

Afin de mieux comprendre les modes de réalisation de la présente invention, un exemple d'utilisation va maintenant être décrit en détails dans le cas d'une interface tactile 1 située au niveau de la console centrale d'un véhicule automobile. La figure 5 représente le menu initial affiché lors de la mise en route du véhicule automobile. L'écran est divisé en 6 parties 20a, 20b, 20c, 20d, 20e et 20f correspondant respectivement à 6 fonctions différentes : « audio », « climatisation », « navigation », « téléphone », « vidéo » et « urgences ». Pour sélectionner une fonction, l'utilisateur appuie son doigt sur la partie d'écran correspondant à la fonction désirée, par exemple la partie 20a en haut à gauche correspondant à la fonction « audio ». L'appui sur cette partie d'écran est détecté par les capteurs de force 5 en effectuant une triangulation sur trois capteurs. En effet, plus l'appui est situé près d'un capteur de force 5 plus la force détectée est grande. Ainsi, dans le cas d'un appui sur la partie 20a, la plus grande force sera mesurée par le capteur 5a et la force la plus faible par le capteur 5d. De plus, en modifiant à chaque mesure la combinaison de trois capteurs de force pour la triangulation, on améliore la fiabilité de la détection du positionnement de l'appui. Le capteur de force 5 non utilisé pour la triangulation peut être utilisé pour mesurer des paramètres environnementaux influençant les mesures des capteurs de force 5. Par exemple, des vibrations peuvent être engendrées par le revêtement de la route, ou bien la surface tactile peut être inhomogène d'un point de vue comportement vibratoire, etc... Ces vibrations sont mesurées par le quatrième capteur et les mesures du quatrième capteur sont utilisées pour compenser les mesures des trois autres capteurs 5. Une fois que la position de l'appui est détectée, la fonction correspondant à la position de l'appui est déterminée par des moyens de traitement comme par exemple un microcontrôleur. Le rectangle correspondant à la fonction sélectionnée s'affiche alors dans un couleur différente et une vibration est émise par l'un des capteurs de force piézoélectriques pour fournir un retour haptique à l'utilisateur. Cette vibration est par exemple réalisée par le capteur ne servant pas à la triangulation. La validation de la fonction sélectionnée est alors réalisée par une pression plus forte de l'utilisateur. Selon un autre mode de réalisation, la validation peut être effectuée par le retrait du doigt de l'utilisateur de la zone de la surface concernée ou encore par une zone de validation dédiée. En effet, le logiciel de traitement des données des capteurs de force 5 peut être configuré pour valider la commande lorsque la force d'appui est supérieure à un seuil prédéterminé. Le déclenchement de la validation peut être réalisé lorsque la valeur mesurée par l'un des capteurs de force dépasse le seuil ou lorsque la somme des valeurs mesurées par les capteurs de force dépasse le seuil. Un retour haptique peut également être effectué au moment de la validation, soit en plus du retour haptique de sélection, soit à la place du retour haptique de sélection. Ainsi, la validation de la fonction « audio » entraine l'ouverture d'un menu « audio » où différents paramètres peuvent être modifiés comme par exemple le volume, la station de radio ou la piste de musique. De la même manière, l'utilisateur peut alors effectuer les différents réglages par appui sur l'interface de commande tactile 1.

Ainsi, l'utilisation d'une plaque rigide montée sur des capteurs de force permet d'obtenir une interface tactile simple et fiable pouvant être facilement installée dans un véhicule automobile. De plus, l'utilisation de capteurs piézoélectriques amplifiés permet d'obtenir une bonne sensibilité et permet de fournir un retour haptique sans qu'il soit nécessaire d'ajouter un actionneur supplémentaire.

## Revendications

1. Interface de commande tactile (1) comprenant une surface extérieure (2) et des moyens de localisation d'un appui par un doigt d'un utilisateur sur la surface extérieure (2), la surface extérieure étant réalisée par une plaque rigide, lesdits moyens de localisation comprenant:
- au moins quatre capteurs de force (5) sur lesquels la plaque (3) est fixée et configurés pour mesurer une force dans une direction sensiblement normale au plan de la plaque (3),
- des moyens de calcul de la position de l'appui d'un doigt sur la plaque (3) à partir des mesures fournies par au moins trois capteurs de force (5) parmi les au moins quatre capteurs de force (5),
- les moyens de calcul étant configurés pour déterminer la position de l'appui du doigt sur la plaque par triangulation à partir des mesures fournies par lesdits au moins trois capteurs de force (5),
- les moyens de calcul sont configurés pour effectuer une pluralité de localisations par triangulation à partir de trois capteurs de force (5) en utilisant alternativement les différentes combinaisons de trois capteurs parmi les au moins quatre capteurs de force (5)
et dans laquelle au moins un des capteurs de force (5) est configuré pour transmettre un retour haptique à l'utilisateur,.

2. Interface de commande tactile (1) selon la revendication 1 dans laquelle les moyens de calcul sont configurés pour estimer des paramètres environnementaux en utilisant les mesures fournies par un capteur de force (5) non utilisé pour la triangulation.

3. Interface de commande tactile (1) selon la revendications 1 dans laquelle les moyens de calcul sont configurés pour localiser un point d'appui en déterminant un barycentre des mesures fournies par deux capteurs de force (5) successivement pour différentes paires de capteurs de force (5).

4. Interface de commande tactile (1) selon l'une des revendications précédentes dans laquelle les capteurs de force (5) sont des capteurs piézoélectriques.

5. Interface de commande tactile (1) selon la revendication 4 dans laquelle les capteurs piézoélectriques sont des capteurs amplifiés (7) mécaniquement par une structure de forme sensiblement elliptique, l'élément piézoélectrique se trouvant selon le grand axe de l'ellipse et la force mesurée étant appliquée selon le petit axe de l'ellipse.

6. Interface de commande tactile (1) selon l'une des revendications précédentes dans laquelle les moyens de localisation sont configurés pour déterminer la force d'un appui d'un utilisateur.

7. Interface de commande tactile (1) selon l'une des revendications précédentes comprenant également un écran d'affichage (17) disposé en regard de la plaque (3), ladite plaque (3) étant transparente.

8. Interface de commande tactile (1) selon l'une des revendications précédentes dans laquelle les moyens de calcul comprennent un microcontrôleur.

9. Interface de commande tactile (1) selon l'une des revendications précédentes dans laquelle les capteurs de force (5) sont répartis de sorte qu'au niveau de la surface extérieure (2), le barycentre des points situés en regard des capteurs de force (5) diffère du centre géométrique de ladite surface extérieure (2) et en ce que les moyens de localisation sont configurés pour prendre en compte la position des capteurs de force (5) pour déterminer la position d'un appui d'un utilisateur.

## Patentansprüche

1. Berührungssteuerungsschnittstelle (1), welche eine Außenfläche (2) und Mittel zur Lokalisierung eines Drucks durch einen Finger eines Benutzers auf die Außenfläche (2) umfasst, wobei die Außenfläche durch eine starre Platte gebildet wird, wobei die Mittel zur Lokalisierung umfassen:
- wenigstens vier Kraftsensoren (5), auf denen die Platte (3) befestigt ist und die dafür ausgelegt sind, eine Kraft in einer Richtung zu messen, die im Wesentlichen senkrecht zur Ebene der Platte (3) ist,
- Mittel zur Berechnung der Position des Drucks eines Fingers auf die Platte (3) aus den Messwerten, die von wenigstens drei Kraftsensoren (5) von den wenigstens vier Kraftsensoren (5) geliefert werden,
- wobei die Mittel zur Berechnung dafür ausgelegt sind, die Position des Drucks des Fingers auf die Platte durch Triangulation aus den Messwerten zu berechnen, die von den wenigstens drei Kraftsensoren (5) geliefert wurden,
- wobei die Mittel zur Berechnung dafür ausgelegt sind, mehrere Lokalisierungen durch Triangulation anhand von drei Kraftsensoren (5) durchzuführen, indem alternativ die verschiedenen Kombinationen von drei Sensoren von den wenigstens vier Kraftsensoren (5) verwendet werden,
und wobei wenigstens einer der Kraftsensoren (5) dafür ausgelegt ist, eine haptische Rückmeldung an den Benutzer zu übertragen.

2. Berührungssteuerungsschnittstelle (1) nach Anspruch 1, wobei die Mittel zur Berechnung dafür ausgelegt sind, Umgebungsparameter unter Verwendung der Messwerte zu schätzen, die von einem nicht für die Triangulation verwendeten Kraftsensor (5) geliefert werden.

3. Berührungssteuerungsschnittstelle (1) nach Anspruch 1, wobei die Mittel zur Berechnung dafür ausgelegt sind, einen Druckpunkt zu lokalisieren, indem ein Baryzentrum der von zwei Kraftsensoren (5) gelieferten Messwerte nacheinander für verschiedene Paare von Kraftsensoren (5) bestimmt wird.

4. Berührungssteuerungsschnittstelle (1) nach einem der vorhergehenden Ansprüche, wobei die Kraftsensoren (5) piezoelektrische Sensoren sind.

5. Berührungssteuerungsschnittstelle (1) nach Anspruch 4, wobei die piezoelektrischen Sensoren Sensoren sind, die durch eine Struktur von im Wesentlichen elliptischer Form (7) mechanisch verstärkt sind, wobei das Piezoelement entlang der großen Achse der Ellipse angeordnet ist und die gemessene Kraft entlang der kleinen Achse der Ellipse ausgeübt wird.

6. Berührungssteuerungsschnittstelle (1) nach einem der vorhergehenden Ansprüche, wobei die Mittel zur Lokalisierung dafür ausgelegt sind, die Kraft eines durch einen Benutzer ausgeübten Drucks zu bestimmen.

7. Berührungssteuerungsschnittstelle (1) nach einem der vorhergehenden Ansprüche, welche außerdem einen Anzeigebildschirm (17) umfasst, der gegenüber der Platte (3) angeordnet ist, wobei die Platte (3) durchsichtig ist.

8. Berührungssteuerungsschnittstelle (1) nach einem der vorhergehenden Ansprüche, wobei die Mittel zur Berechnung einen Mikrocontroller umfassen.

9. Berührungssteuerungsschnittstelle (1) nach einem der vorhergehenden Ansprüche, wobei die Kraftsensoren (5) derart verteilt sind, dass sich an der Außenfläche (2) das Baryzentrum der Punkte, die sich gegenüber den Kraftsensoren (5) befinden, vom geometrischen Mittelpunkt der Außenfläche (2) unterscheidet, und dadurch, dass die Mittel zur Lokalisierung dafür ausgelegt sind, die Position der Kraftsensoren (5) zu berücksichtigen, um die Position eines Drucks eines Benutzers zu bestimmen.

## Claims

1. Tactile control interface (1) including an outer surface (2) and means for locating a pressure by a finger of a user on the outer surface (2), the outer surface being implemented by a rigid plate, said locating means including:
- at least four force sensors (5) onto which the plate (3) is attached and which are configured for measuring a force in a direction substantially normal to the plane of the plate (3),
- means for calculating the position of the pressure of a finger on the plate (3) on the basis of the measurements supplied by at least three force sensors (5) from among the at least four force sensors (5),
- the calculation means being configured to determine the position of the pressure of the finger on the plate through triangulation on the basis of the measurements supplied by said at least three force sensors (5),
- the calculation means are configured to perform a plurality of locations through triangulation on the basis of three force sensors (5) by using alternately the different combinations of three sensors from among the at least four force sensors (5),
and in which at least one of the force sensors (5) is configures to transmit haptic feedback to the user.

2. Tactile control interface (1) according to Claim 1, in which the calculation means are configured to estimate environmental parameters by using the measurements supplied by a force sensor (5) not used for the triangulation.

3. Tactile control interface (1) according to Claim 1, in which the calculation means are configured to locate a pressure point by determining a barycentre of the measurements supplied by two force sensors (5) successively for different pairs of force sensors (5).

4. Tactile control interface (1) according to one of the preceding claims, in which the force sensors (5) are piezoelectric sensors.

5. Tactile control interface (1) according to Claim 4, in which the piezoelectric sensors are sensors (7) mechanically amplified by a more or less elliptically shaped structure, the piezoelectric element being located along the major axis of the ellipse and the force measured being applied along the minor axis of the ellipse.

6. Tactile control interface (1) according to one of the preceding claims, in which the locating means are configured to determine the force of a pressure of a user.

7. Tactile control interface (1) according to one of the preceding claims, also including a display screen (17) disposed facing the plate (3), said plate (3) being transparent.

8. Tactile control interface (1) according to one of the preceding claims, in which the calculation means include a microcontroller.

9. Tactile control interface (1) according to one of the preceding claims, in which the force sensors (5) are distributed in such a way that the barycentre of the points situated facing the force sensors (5) on the outer surface (2) differs from the geometric centre of said outer surface (2) and in that the locating means are configured to take account of the position of the force sensors (5) in order to determine the position of a pressure of a user.
